# EUROPÄISCHE PATENTSCHRIFT

(11) **EP 1 712 116 B1**
(45) Veröffentlichungstag und Bekanntmachung des Hinweises auf die Patenterteilung: **04.06.2014**
(21) Anmeldenummer: 06006470.6
(22) Anmeldetag: 29.03.2006
(51) Int. Cl.: A01C 7/04

(54) **Pneumatische Einzelkornsämaschine**
Pneumatic precision seed drill
Semoir monogerme pneumatique

(30) Priorität: 16.04.2005 DE 102005017601
(43) Veröffentlichungstag der Anmeldung: 18.10.2006
(73) Patentinhaber: Amazonen-Werke H. Dreyer GmbH & Co. KG, 49205 Hasbergen (DE)
(72) Erfinder: Johannaber, Stefan Jan, 49536 Lienen (DE); Schmidt, Richard, 27798 Hude (DE); Steen, Rüdiger, 27798 Hude (DE); Pokriefke, Michael, 27798 Hude (DE)

(56) Entgegenhaltungen:
- EP-A- 0 216 057
- EP-A- 0 598 636
- EP-A- 1 321 020
- US-A1- 2003 110 996

## Beschreibung

Die Erfindung betrifft eine pneumatische Einzelkornsämaschine gemäß des Oberbegriffes des Patentanspruches 1.

Durch die EP 05 98 636 B1 ist eine derartige Einzelkornsämaschine bekannt. Das Problem bei derartigen Einzelkornsämaschinen großer Arbeitsbreite besteht darin, dass die einzelnen Seitensegmente gegenüber dem Mittelteil aus einer Arbeitslage in eine Transportlage gebracht werden müssen. Bisherige Einklappmechanismen bestehen darin, dass zwischen dem Mittelteil und den Seitensegmenten parallelogrammartige Gestänge angeordnet sind, mittels derer die Außensektion über das Mittelteil eingeschwenkt werden. Diese Klapptechnik ist sehr aufwendig und teuer. Ein derartiges Einschwenken zeigt beispielsweise die deutsche Offenlegungsschrift 43 03 101.

Andere Klapptechniken, insbesondere bei Bodenbearbeitungsgeräten und Geräten, bei denen sich an den einklappbaren Seitensegmenten keine Vorratsbehälter mit Vereinzelungseinrichtungen befinden, werden diese um eine in Fahrtrichtung verlaufende Schwenkachse um 90° nach oben in eine Transportstellung eingeklappt. Dieses ist jedoch bei Einzelkornsämaschinen bei denen sich die Vorratsbehälter mit Vereinzelungseinrichtungen an den einklappbaren Seitensegmenten befinden, nicht möglich, weil die Saatkörner aus dem Vorratsbehälter über den Zwischenraum zwischen der Vereinzelungseinrichtung und der den Vorratsbehälter vom Vereinzelungsraum trennenden Trennwand durch den Vereinzelungsraum ins Freie laufen.

Der Erfindung liegt die Aufgabe zugrunde eine Einzelkornsämaschine zu schaffen, bei welchem die Seitensegmente mit den daran angeordneten Vorratsbehältern und Vereinzelungsvorrichtungen um eine waagerecht verlaufende Schwenkachse um 90° in eine Transportstellung verschwenkt werden können.

Diese Aufgabe wird erfindungsgemäß durch das kennzeichnende Merkmal des Patentanspruches 1 gelöst. Infolge dieser Maßnahmen wird der Zwischenraum zwischen der Vereinzelungseinrichtung und der Tennwand durch die Absperreinrichtung vor dem Verschwenken des jeweiligen Seitensegmentes mit dem Vorratsbehälter und der Vereinzelungseinrichtung aus der Arbeits- in die Transportstellung verschlossen. Somit kann kein Saatgut aus dem Vorratsbehälter bzw. das an der Vereinzelungseinrichtung anliegende Saatgut weder ins Freie fließen noch den Vereinzelungsraum im Bereich der Vereinzelungseinrichtung in unerwünschter Weise füllen.

In einer Ausführungsform ist vorgesehen, dass die Absperrvorrichtung als um eine Schwenkachse verschwenkbare Klappe ausgebildet ist.

Um die Klappe in einfacher Weise während des Ausbring- und Vereinzelungsvorgangs in eine Position bringen zu können, damit sie während des Vereinzelungsvorganges den Vereinzelungsvorgang nicht behindert, ist vorgesehen, dass die Schwenkachse der Klappe sich in der Nähe der Trennwand befindet. Hierdurch kann die Klappe unmittelbar an die Trennwand herangeschwenkt werden.

In einer weiteren Ausführung ist vorgesehen, dass die Absperrvorrichtung als aufblasbare und/oder sich aufblasende schlauchähnliche Hülle ausgebildet ist. Infolge dieser Maßnahme ergibt sich eine einfach aufgebaute Absperreinrichtung, die sicher abdichtet und wartungsarm ist.

Damit die schlauchähnliche Hülle ihre jeweilige Ausdehnung zum Absperren oder Freigeben einnimmt, ist vorgesehen, dass die schlauchähnliche Hülle mittels Unterdruck evakuiert wird und hierdurch kollabiert und den abzusperrenden Zwischenraum freigibt.

Es ist auch möglich, die schlauchähnliche Hülle mit mechanischen Elementen, wie beispielsweise einem elektrischen Zugmagneten, Stellmotor, Hydraulikzylinder zu deformieren bzw. zu entspannen.

Weitere Einzelheiten der Erfindung sind der Beispielsbeschreibung und den Zeichnungen zu entnehmen. Hierbei zeigen
- Fig. 1: die Einzelkornsämaschine in der Ansicht von hinten in Transportstellung und in Prinzipdarstellung,
- Fig. 2: die Einzelkornsämaschine mit in Transportstellung eingeschwenkten Teilsegmenten mit den jeweils daran angeordneten Vorratsbehälter und Vereinzelungseinrichtung in Transportstellung und in Prinzipdarstellung in der Ansicht von hinten,
- Fig. 3: die Vereinzelungseinrichtung mit Vorratsbehälter in Seitensicht, wobei die Absperreinrichtung sich in Parkstellung befindet,
- Fig. 4: den unteren Bereich der Vereinzelungseinrichtung mit sich in Parkstellung befindlicher Absperreinrichtung gemäß Fig. 3 in vergrößertem Maßstab,
- Fig. 5: die Vereinzelungseinrichtung in der Darstellung gemäß Fig. 4 mit sich in Absperrstellung befindlicher Absperreinrichtung,
- Fig. 6: die Vereinzelungseinrichtung einer weiteren Vereinzelungssämaschine in vereinfachter Darstellung und in Explosions- und perspektivischer Darstellung,
- Fig. 7: die als schlauchähnliche Hülle ausgebildete. Absperreinrichtung im Schnitt, Prinzipdarstellung und in Absperrstellung,
- Fig. 8: die schlauchähnliche Hülle gemäß Fig. 7 in Partstellung,
- Fig. 9: die weitere als schlauchähnliche Hülle ausgebildete Absperreinrichtung im Schnitt, in Prinzipdarstellung und in Absperrstellung
- Fig. 10: die schlauchähnliche Hülle gemäß Fig. 9 in Parkstellung.

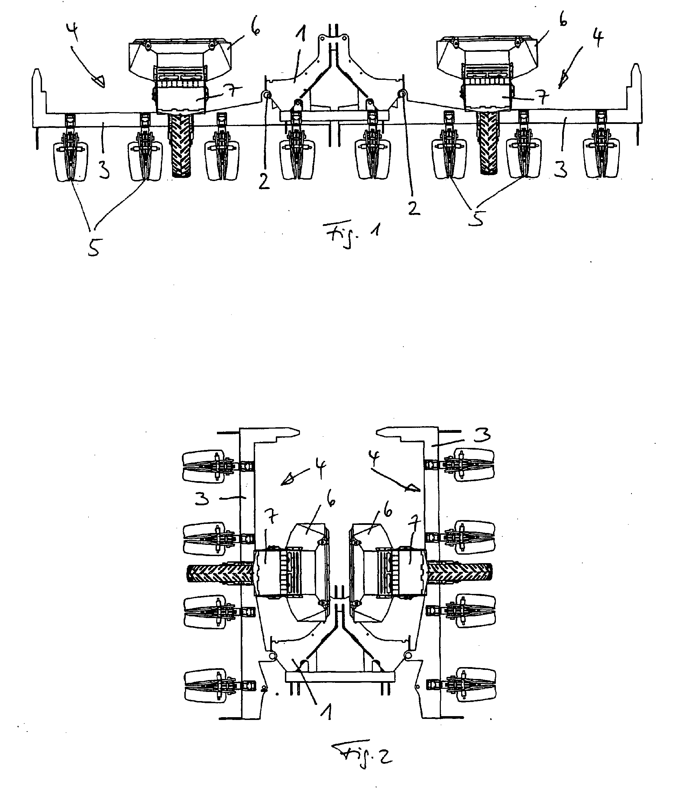

Die als Einzelkornsämaschine ausbildete Sämaschine weist den Mittelrahmen 1 auf, an dem mittels der Schwenkgelenke 2, deren Schwenkachsen in Fahrtrichtung verlaufen, die Tragbalken 3 der Seitensegmente 4 angeordnet sind. An jedem Tragbalken 3 der Seitensegmente 4 sind mehrere Säschare 5 sowie ein Vorratsbehälter 6 mit einer Vereinzelungseinrichtung 7 angeordnet. Mittels nicht dargestellter, vorzugsweise als Hydraulikzylinder ausgebildeter Stellelemente, die zwischen dem Mittelrahmen 1 und den Tragbalken 3 der Seitenelemente 4 angeordnet sind, sind die Seitensegmente 4 aus der in Fig. 1 dargestellten Arbeitsstellung in die in Fig. 2 dargestellte Transportstellung um 90° zu verschwenken.

Die Sämaschine weist die Vorratsbehälter 6 und die unterhalb des jeweiligen Vorratsbehälters 6 in einem Gehäuse 8 drehbar angeordnete und rotierend angetriebene als Vereinzelungstrommel 9 ausgebildete Vereinzelungseinrichtung 7 auf. In der Umfangsfläche der Vereinzelungstrommel 9 sind kreisförmig angeordnete Perforationsreihen angeordnet. Der Vorratsbehälter 6 und das Gehäuse 8 oberhalb der Trommel 9 sind zumindest annähernd druckdicht mittels eines Deckels verschlossen. Über den Luftanschlusskasten 10 ist der Vorratsbehälter 6 und das Gehäuse 8 oberhalb der Trommel 9 durch das in dem Anschlusskasten 10 angeschlossene und nicht dargestellte Druckgebläse mit Druckluft beaufschlagbar, so dass die Perforationsreihen mit einer Druckdifferenz zwischen dem Innenraum 11 der Vereinzelungstrommel 9 und dem Außenbereich 12 der Vereinzelungstrommel 9 erzeugt wird. Aufgrund dieser Druckdifferenz lagern sich an den Perforationsreihen der Vereinzelungstrommel 9, wenn diese durch den Saatgutvorrat 13, der sich aufgrund der Führung des Saatgutschachtes 12 bis unterhalb der Drehachse der Trommel 9 erstreckt, die Samenkörner an. Der Saatgutvorratsbehälter 6 bzw. das Gehäuse unterhalb des Saatgutvorratsbehälters 6, in dem die Vereinzelungstrommel 9 drehend und abdichtend gelagert ist, weist die einander beabstandeten Seitenwände 14 auf, die sich parallel zur Bewegungsrichtung der Trommel 9 erstrecken und mit der Trommel 9 zumindest annähernd abdichtend zusammen wirken.

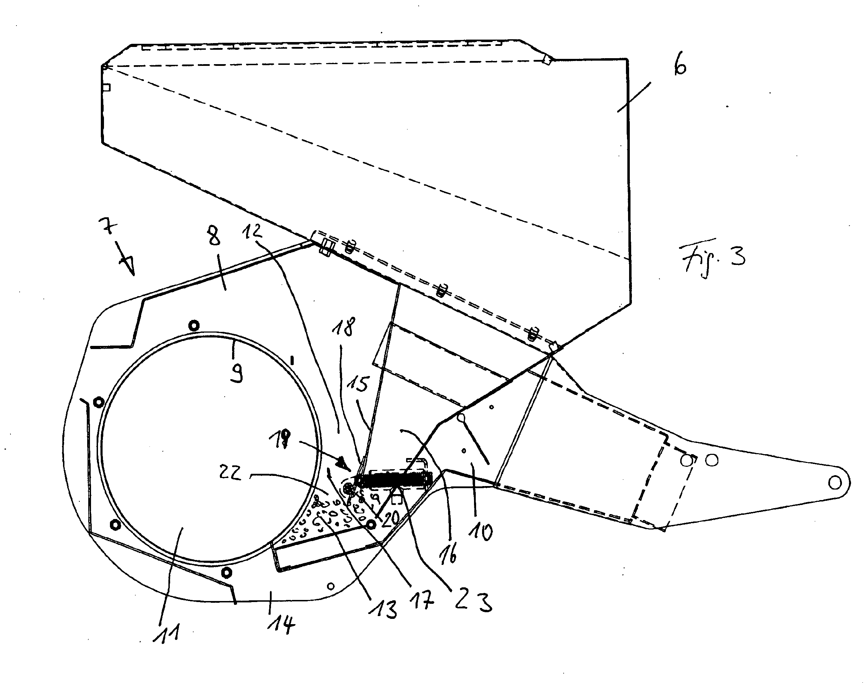

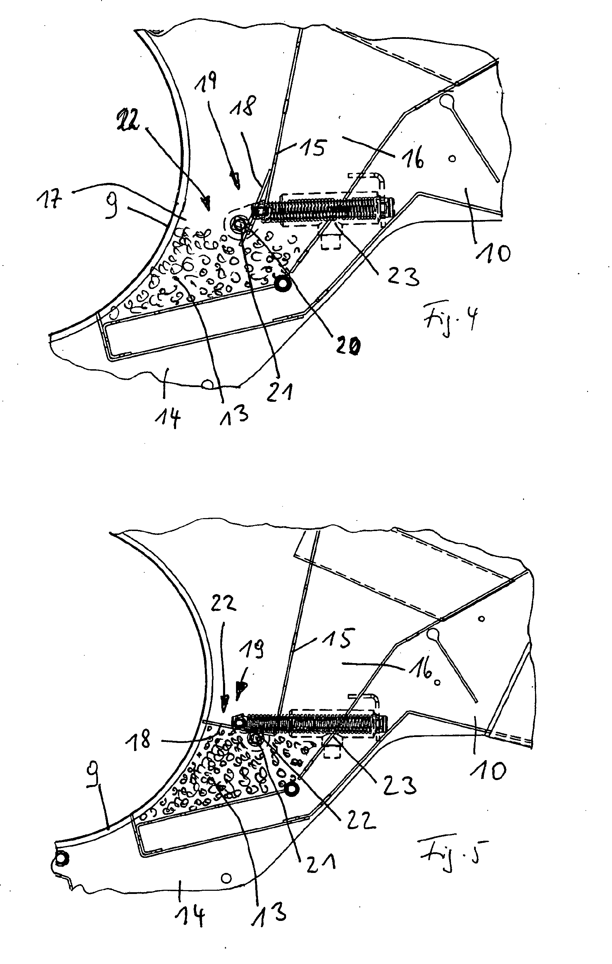

Die Trennwand 15 trennt den sich an den Saatgutvorratsbehälter 6 anschließenden Saatgutführungsschacht 16 von dem Vereinzelungsbereich 17 der Trommel 9 der Vereinzelungseinrichtung 7. Zwischen der als Trommel 9 ausgebildeten Vereinzelungseinrichtung 7 und der Trennwand 15 ist im Bereich des unteren Endes der Trennwand 15 und oberhalb der Saatgutvorratshöhe die als verschwenkbare Klappe 18 ausgebildete Absperreinrichtung 19 angeordnet. Die Absperreinrichtung 19 ist um die durch die Schwenkgelenke 20 verlaufende Schwenkachse 21 verschwenkbar an den Seitenwänden 14 angeordnet. Die Schwenkachse 21 befindet sich in der Nähe des unteren Endes der Trennwand 15. Mittels der Klappe 18 kann der Zwischenraum 22 zwischen der Trennwand 15 bzw. dem Saatgutzuführungsschacht und der Trommel 9 verschlossen werden. Hierzu wird mittels des der Klappe 18 zugeordneten Stellelementes 23, welches im Ausführungsbeispiel als einfach wirkender Hydraulikzylinder mit zugeordneter Zugfeder ausgebildet ist, aus der in den Fig. 3 und 4 dargestellten Parkposition, in welcher der Zwischenraum 22 zwischen dem Saatgutführungsschacht 16 und der Trommel 9 offen ist, in die in Fig. 5 dargestellten Absperrposition, in welcher die Klappe 18 den Zwischenraum 22 zwischen der Trommel 9 und dem Saatgutzuführungsschacht 16 verschließt. Der Zwischenraum 22 ist durch die sich in Parkposition befindliche Klappe 18 während des Ausbringens von Saatgut offen. Bevor die Maschine in die in Fig. 2 dargestellte Transportstellung gebracht wird, d.h. der Vorratsbehälter 6 mit der Vereinzelungseinrichtung 7 wird um 90° verschwenkt, wird der Zwischenraum 22 durch die als Klappe 18 ausgebildete Absperreinrichtung 19 verschlossen, damit kein Saatgut durch den Zwischenraum 22 gelangen kann.

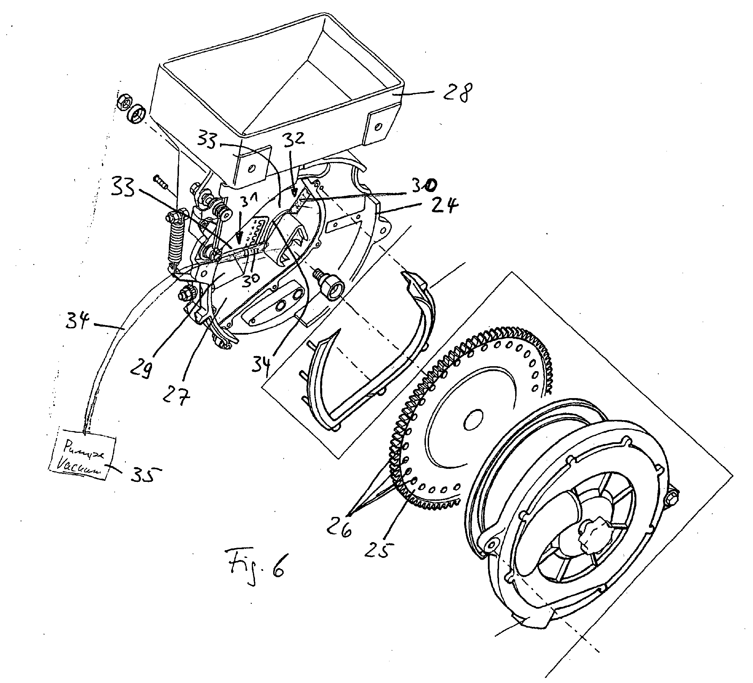

Die Fig. 6 zeigt eine andere Vereinzelungseinrichtung einer Einzelkornsämaschine. In dem Vereinzelungsgehäuse 24 ist die Vereinzelungsscheibe 25 angeordnet. In der Vereinzlungsscheibe 25 sind mit Saugluft beaufschlagbare Perforierungen 26 angebracht, an welche sich Samenkörner anlagern, wenn sie durch den Saatgutvorrat, der sich in dem Saatgutvorratsbereich 27 in dem Vereinzelungsgehäuse 24 befindet, geführt werden. Die Samenkörner gelangen aus dem Vorratsbehälter 28, der auf dem Vereinzelungsgehäuse 24 aufgesetzt ist, über den Saatgutzuführungskanal 29 in den Saatgutvorratsbereich 27. Oberhalb des Zuführungskanals 29 ist in dem Vereinzelungsgehäuse 24 die als aufblasbare bzw. sich aufblasende schlauchähnliche Hülle 30 ausgebildete Absperreinrichtung angeordnet. Weiterhin ist in dem oberen Bereich des Gehäuses 24 ebenfalls eine als aufblasbare oder sich aufblasende schlauchähnliche Hülle 30 ausgebildete Absperreinrichtung angeordnet. Die Hüllen 30 verschließen in ihren ausgedehnten Zustand jeweils den Zwischenraum 31 und 32 zwischen der als Vereinzelungsscheibe 25 ausgebildeten Vereinzelungseinrichtung und der Trennwand 33 des Gehäuses 34.

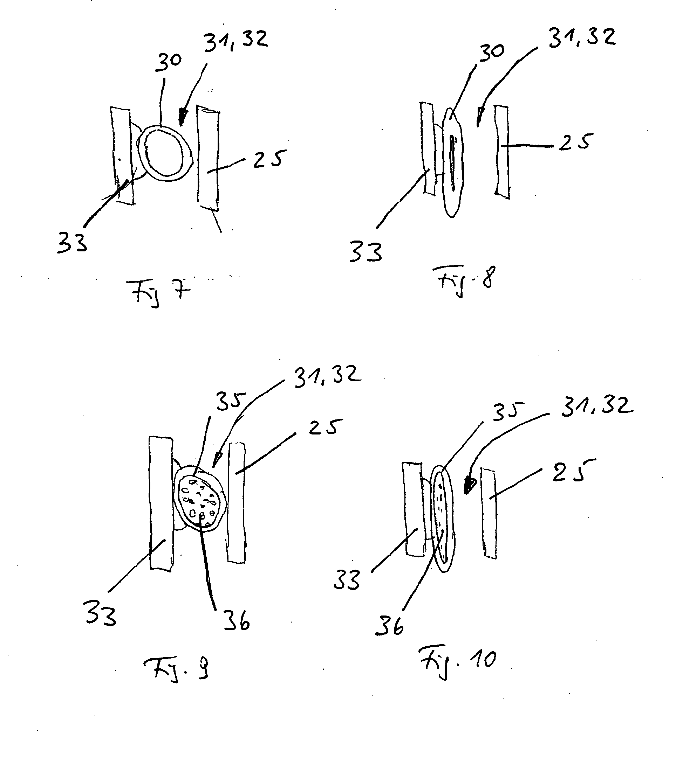

Die Ausgestaltung der schlauchähnlichen Hülle 30 ist in den Fig. 7-10 dargestellt und wird anhand dieser Figuren im Folgenden näher erläutert:
An der Trennwand 33 des Gehäuses 24 ist die schlauchähnliche Hülle 30 befestigt, hierbei kann die schlauchähnliche Hülle 30 von ihrem Grundverhalten unterschiedlich ausgestaltet sein.

Wenn die schlauchähnliche Hülle 30 die in der Fig. 7 dargestellten Querschnitt einnimmt, ohne das sie mit einer Kraft beaufschlagt wird, versperrt sie in ihrem ausgedehnten Zustand den Zwischenraum 31 zwischen der Scheibe 25 und der Trennwand 33. Einen derartigen ausgedehnten Zustand kann die schlauchähnliche Hülle 31 aufgrund ihrer Material- und Formeigenschaften einnehmen. Wenn die schlauchähnliche Hülle in Parkposition gebracht werden soll, d.h. das der Zwischenraum 31, 32 zwischen der Trennwand 33 und der Scheibe 25 entsprechend Fig. 8 freigegeben ist, wird die schlauchähnliche Hülle 30 mit Unterdruck beaufschlagt. Hierzu ist die schlauchähnliche Hülle 30 über einen Schlauch 34 mit einer vereinfacht dargestellten Vakuumpumpe 35 verbunden.

Es ist jedoch auch möglich, dass die schlauchähnliche Hülle 30, ohne das eine Kraft auf sie einwirkt, aufgrund ihrer Material- und Formeigenschaften die in Fig. 8 dargestellte Parkposition, in welcher der Zwischenraum 31, 32 zwischen Trennwand 33 und Vereinzelungsscheibe 25 freigegeben ist, einnimmt. Um dann den Zwischenraum 31, 32 zwischen der Vereinzlungsscheibe 25 und der Trennwand 33 abzusperren, wird die schlauchähnliche Hülle 30 mit einem Überdruck beaufschlagt, d.h. sie wird aufgeblasen. Hierzu ist die schlauchähnliche Hülle über einen Verbindungsschlauch 34 entsprechend mit einer Druckluftpumpe verbunden.

Gemäß Fig. 9 ist die schlauchähnliche Hülle 35 mit einem Schaumstoff 36 gefüllt, welcher die schlauchähnliche Hülle 35 in der dargestellten Expansionsstellung hält, so dass der Zwischenraum 31, 32 zwischen Trennwand 33 zum Vorratsbehälter 28 und Vereinzelungsscheibe 25 verschlossen ist. Um die schlauchähnliche Hülle 35 zusammen fallen zu lassen, ist die schlauchähnliche Hülle über einen Schlauch 34 mit einer Vakuumpumpe 36 verbunden, so dass die schlauchähnliche Hülle 35 mittels Unterdruck evakuiert wird und hierdurch kollabiert und den abzusperrenden Zwischenraum 31, 32 zwischen Trennwand 33 und Vereinzelungsscheibe 25 freigibt, wie Fig. 10 zeigt.

Es ist auch möglich, dass mittels mechanischer Elemente auf die schlauchähnliche Hülle 35 eingewirkt wird, damit die schlauchähnliche Hülle 35 deformiert wird oder sich entspannen kann.

## Patentansprüche

1. Pneumatische Einzelkornsämaschine mit einem Saatgutvorratsbehälter (6), einer mit Luftdruck beaufschlagten, Perforation aufweisenden und sich drehenden Vereinzelungseinrichtung (7, 9, 25), die mit ihren unterhalb der Drehachse liegenden Bereich zumindest teilweise zur Anlagerung von Samenkörnern an der Perforation durch einen aus dem Vorratsbehälter (6) an die Vereinzelungseinrichtung (7, 9, 25) geführten Saatgutvorrat geführt wird, wobei sich zwischen dem Vorratsbehälter (6) und der Vereinzelungseinrichtung (7, 9, 25) eine die Saatgutvorratshöhe bestimmende und sich mit Abstand zur Vereinzelungseinrichtung (7, 9, 25) in aufrechter Richtung erstreckende Trennwand (15) befindet, **dadurch gekennzeichnet, dass** zwischen der Vereinzelungseinrichtung (7, 9, 25) und der Trennwand (15, 33) im Bereich des unteren Endes der Trennwand (15, 33) und oberhalb der Saatgutvorratshöhe eine den Zwischenraum (22, 31, 32) zwischen der Vereinzelungseinrichtung (7, 9, 25) und der Trennwand (15, 33) verschließende verstellbar ausgebildete Absperreinrichtung (18, 19, 30, 35) angeordnet ist.

2. Einzelkornsämaschine nach Anspruch 1, **dadurch gekennzeichnet, dass** die Absperrvorrichtung (19) als um eine Schwenkachse (21) verschwenkbare Klappe (18) ausgebildet ist.

3. Einzelkornsämaschine nach Anspruch 2, **dadurch gekennzeichnet, dass** die Schwenkachse der Klappe (18) sich in der Nähe des unteren Endes der Trennwand (15) befindet.

4. Einzelkornsämaschine nach Anspruch 1, **dadurch gekennzeichnet, dass** die Absperrvorrichtung als aufblasbare und/oder sich aufblasende schlauchähnliche Hülle (30, 35) ausgebildet ist.

5. Einzelkornsämaschine nach Anspruch 4, **dadurch gekennzeichnet, dass** die schlauchähnliche Hülle (30, 35) mittels Unterdruck evakuiert wird und hierdurch kollabiert und den abzusperrenden Zwischenraum (31, 32) freigibt.

## Claims

1. Pneumatic precision seed drill with a seed storage container (6), and a rotating singulating device (7, 9, 25) which is acted upon by atmospheric pressure, has a perforation and, in order to accumulate seed grains at the perforation, is guided by the region thereof located below the axis of rotation at least partially through a seed store, which is guided out of the storage container (6) to the singulating device (7, 9, 25), wherein a partition (15) which determines the height of the seed store and extends in the vertical direction at a distance from the singulating device (7, 9, 25) is located between the storage container (6) and the singulating device (7, 9, 25), **characterized in that** an adjustably designed shut-off device (18, 19, 30, 35) which closes the intermediate space (22, 31, 32) between the singulating device (7, 9, 25) and the partition (15, 33) is arranged between the singulating device (7, 9, 25) and the partition (15, 33) in the region of the lower end of the partition (15, 33) and above the height of the seed store.

2. Precision seed drill according to Claim 1, **characterized in that** the shut-off device (19) is designed as a flap (18) which is pivotable about a pivot axis (21).

3. Precision seed drill according to Claim 2, **characterized in that** the pivot axis of the flap (18) is located in the vicinity of the lower end of the partition (15).

4. Precision seed drill according to Claim 1, **characterized in that** the shut-off device is designed as an inflatable and/or inflating, tube-like casing (30, 35).

5. Precision seed drill according to Claim 4, **characterized in that** the tube-like casing (30, 35) is evacuated by means of negative pressure and thereby collapses and opens up the intermediate space (31, 32) which is to be shut off.

## Revendications

1. Semoir monogerme pneumatique avec un réservoir de stockage de semences (6), un dispositif de séparation rotatif (7, 9, 25) soumis à une pression d'air et présentant des perforations, qui est guidé avec sa région située en dessous de l'axe de rotation au moins partiellement pour le dépôt de graines de semences à la perforation à travers une réserve de semences guidée depuis le réservoir de stockage (6) jusqu'au dispositif de séparation (7, 9, 25), dans lequel il se trouve entre le réservoir de stockage (6) et le dispositif de séparation (7, 9, 25) une cloison (15) déterminant la hauteur de la réserve de semences et s'étendant en direction verticale à distance du dispositif de séparation (7, 9, 25), **caractérisé en ce qu'**un dispositif de fermeture réglable (18, 19, 30, 35), fermant l'espace intermédiaire (22, 31, 32) entre le dispositif de séparation (7, 9, 25) et la cloison (15, 33), est disposé entre le dispositif de séparation (7, 9, 25) et la cloison (15, 33) dans la région de l'extrémité inférieure de la cloison (15, 33) et au-dessus de la hauteur de la réserve de semences.

2. Semoir monogerme selon la revendication 1, **caractérisé en ce que** le dispositif de fermeture (19) est réalisé sous la forme d'un clapet (18) pouvant pivoter autour d'un axe de pivotement (21).

3. Semoir monogerme selon la revendication 2, **caractérisé en ce que** l'axe de pivotement du clapet (18) se trouve à proximité de l'extrémité inférieure de la cloison (15).

4. Semoir monogerme selon la revendication 1, **caractérisé en ce que** le dispositif de fermeture est réalisé sous la forme d'une enveloppe en gaine flexible (30, 35) qui peut être gonflée et/ou qui se gonfle.

5. Semoir monogerme selon la revendication 4, **caractérisé en ce que** l'enveloppe en gaine flexible (30, 35) est évacuée par dépression et est ainsi aplatie et libère l'espace intermédiaire à fermer (31, 32).
